Europäisches Patentamt

European Patent Office

Office européen des brevets

(19)

(11) Publication number: **0 273 760**
**A2**

## EUROPEAN PATENT APPLICATION

(12)

(21) Application number: **87311494.6**

(22) Date of filing: **29.12.87**

(51) Int. Cl.⁴: **A 21 C 11/16**

(30) Priority: **26.12.86 JP 308844/86**

(43) Date of publication of application:
**06.07.88 Bulletin 88/27**

(84) Designated Contracting States:
**AT BE CH DE ES FR GB IT LI NL SE**

(71) Applicant: **RHEON AUTOMATIC MACHINERY CO. LTD.**
**2-3, Nozawa-machi**
**Utsunomiya-shi Tochigi-ken (JP)**

(72) Inventor: **Aoki, Shigeru**
**228-13, Nozawa-machi**
**Utsunomiya-shi Tochigi-ken (JP)**

(74) Representative: **Boyes, Kenneth Aubrey et al**
**Frank B. Dehn & Co. Imperial House 15-19 Kingsway**
**London WC2B 6UZ (GB)**

(54) **An apparatus for shaping a dough product.**

(57) An apparatus for shaping a dough ring comprising a hopper (10), a chamber (18), and shaping means (40), is provided. In this apparatus, dough is introduced into the chamber (18) and the shaping means (40) with pushing means (30, 30a), which eliminates the need to rely on a compressor or pump to propel dough out of the hopper. Further, the movement of the pushing means (30, 30a) is controlled to provide pressure to push a desired amount of dough into the shaping means (40), the size of dough ring being readily changed by regulating the movement of the pushing means (30, 30a)

FIG. I

EP 0 273 760 A2

**Description**

AN APPARATUS FOR SHAPING A DOUGH PRODUCT

This invention relates to an apparatus for shaping a dough product, and in particular to an apparatus for easily shaping a dough ring of any desired size.

In conventional process for producing a dough ring for a doughnut, various materials such as flour, eggs, sugar, and milk are mixed and kneaded to make dough. Such dough, which generally has a high flowability, is then shaped into a dough ring. Finally, the dough ring is fried in an oil vessel, resulting in a ring doughnut.

Japanese Utility Model Publication No. 56-18287, corresponding to U.S. Serial No. 239,078, filed on March 29, 1972, discloses an apparatus for forming a ring doughnut with an internal filling, and this publication is incorporated herein as a reference. In the apparatus of this publication, the shaping means includes an inner sleeve, and an outer sleeve provided slidably movable along the inner sleeve. The shaping means also includes a shaft extending along the axis of the sleeves and a disc provided on one end of the shaft. The outer sleeve is arranged so that when it is positioned away from the disc, a gap is provided between the outer sleeve and the periphery of the disc, forming an annular opening, and when moved toward the disc, the annular opening is closed.

In the apparatus, when the annular opening is open, dough is pushed out of it until an amount of dough suitable, for forming a doughnut is push out. Then the outer sleeve is slidably moved toward the disc to close the annular opening so that the dough at the annular opening can be cut and shaped into a dough ring. Since a frier apparatus is positioned adjacent the shaping apparatus, to receive the dough ring, the dough ring drops into an oil vessel containing oil heated at a preselected temperature. As a result the dough ring is properly fried and becomes a doughnut.

In the apparatus of this prior art, an internal filling is provided from an inner shell of the filling material supply means provided between the inner and outer sleeves. Thus, the doughnut made from the dough ring shaped by the apparatus has a filling such as cream and jelly.

However, the apparatus requires an air compressor or pump to push dough out of a hopper into the inner sleeve. Such a compressor or pump is rather expensive and makes the apparatus complicated. Also, it is difficult to control such a pressure means. Moreover in the apparatus of the publication the size of a dough ring is regulated by controlling the time cycle of the movement of the outer sleeve. Thus, to change the dough ring size control in the pump or compressor and the movement of the outer sleeve are required. Therefore, it is very difficult for an operator to change the size of a dough ring to accommodate the needs of customers, because he has to adjust the timing in the apparatus, which is very complicated.

An object of this invention is to provide an apparatus for shaping a dough product such as a dough ring in which the amount of dough pushed out is readily regulated, thereby producing a dough product of any desired size.

Another object of this invention is to provide an apparatus for shaping a dough product whose structure is simple and inexpensive compared with the apparatus of the prior art.

According to an aspect of this invention, an apparatus for shaping a dough product is provided, including a hopper for containing dough, with an inlet and an outlet, a chamber communicating with said hopper via a shutter provided at the outlet of the hopper and adapted to close or open the communication between the hopper and the chamber, and at least one shaping means communicating with said chamber, characterized by pushing means provided in said chamber for pushing a predetermined amount of said dough from said chamber into said shaping means so that the same amount of dough is fed out of said shaping means. Preferably the shaping means inlcudes an inner sleeve defining a cylindrical space communicating with said chamber, an outer sleeve provided slidably movable long said inner sleeve,
a shaft extending along the axis of said cylindrical space beyond the end of said sleeves, and
a disc provided on one end of said shaft, the periphery of said disc being in alignment with the path of said outer sleeve,
said outer sleeve being arranged so that when positioned away from said disc, a gap is provided between said sleeve and the periphery of said disc, forming an annular opening, and, when moved toward the disc, said annular opening is closed, whereby a dough ring is fed out of said annular opening of said shaping means.

Further, according to another aspect of this invention, a method for shaping a dough product is provided, comprising the steps of opening the shutter of a hopper positioned at the bottom thereof, introducing dough from said hopper into a chamber terminating in a space with an opening therein, closing said shutter, decreasing the volume of said chamber space, thereby pushing a predetermined amount of said dough from said space through said opening, and cutting said dough at said opening to shape a dough product. Preferably the dough is introduced from said hopper into a chamber terminating in a cylindrical space with an annular opening at the bottom thereof and said dough is cut at said annular opening to shape a dough ring.

In the apparatus of this invention, dough in a hopper is introduced into a chamber communicating with the hopper. The dough is then pushed from the chamber and into the shaping means by the movement of the pushing means provided in the chamber. Thus the apparatus does not need to include a compressor or pump, which is more expensive and makes the apparatus more complicated than the structure of the pushing means of this invention.

Further, the amount of dough fed out of the opening, which corresponds to the size of the dough product shaped, can be changed by regulating the movement of the pushing means to impart a desired pressure on the dough. Therefore, the size of the dough product shaped can be readily changed without the timing of the operation of the members needing to be critically controlled. Preferred embodiments of the invention will now be described by way of example only with reference to the accompanying drawings wherein:-

    Fig. 1 shows a cross-sectional view of a preferred embodiment of the apparatus for producing a dough ring of this invention.

    Fig 2 illustrates in a perspective view the arrangement of the shutter plate members, the plate piston members, and the shaping means.

    Fig 3 and 4 show the operation for shaping a dough ring in the apparatus of the preferred embodiment.

    Fig 5 shows a time chart illustrating the moving operations of the blade fans, the shutter plate members, the plate piston members and the arm to move the outer sleeve.

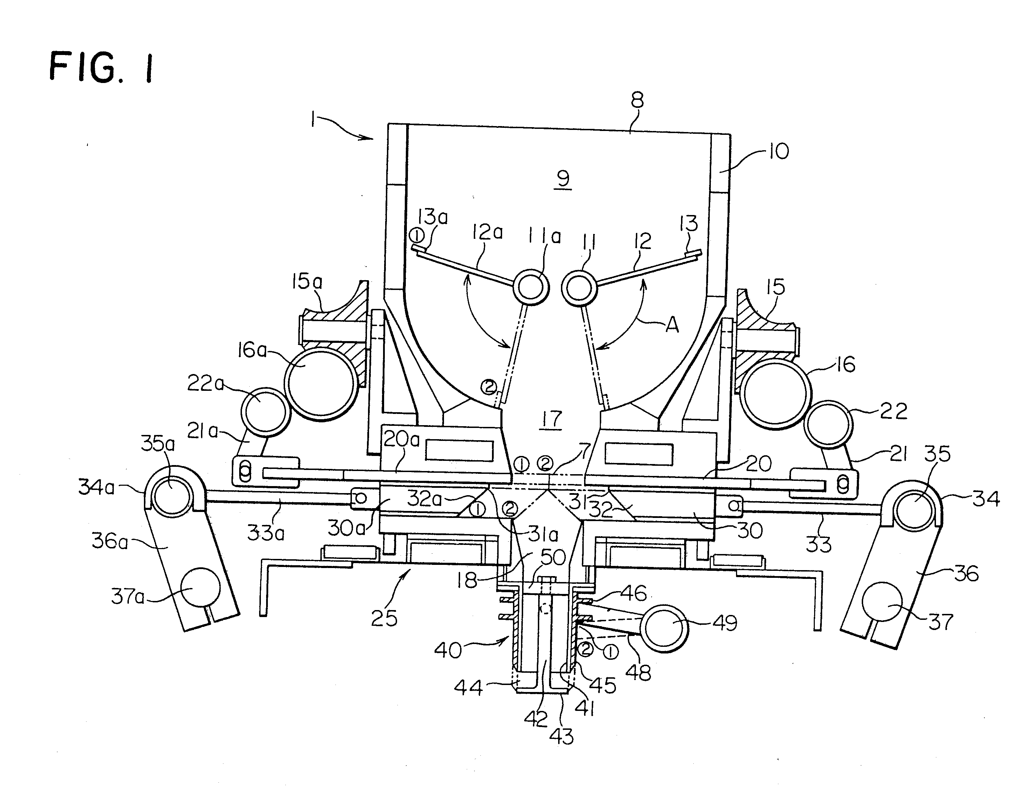

As shown in Fig 1, the apparatus (1) includes a hopper (10), shutter plate members (20, 20a), plate piston members (30, 30a), a chamber (18) and shaping means (40). The hopper (10) includes an upper wider space (9) and a lower narrower space (17). The upper wider space (9) has an inlet (8) to supply the dough to the hopper while the lower narrower space (17) has an outlet (7) at its bottom to provide a path for the dough to progress into the chamber (18). At the center of the upper wider space (9) are a pair of horizontal and parallel shafts (11, 11a). Arms (12, 12a) are swingably mounted to the shafts (11, 11a) and have blades (13, 13a) at their free ends, so that when the arms are swung the dough in the hopper (10) is agitated and propelled toward and into the chamber (18) via the outlet (7).

In the apparatus (1), a pair of wheels (15, 15a), movable along guide rails (16, 16a) supported or a frame (25), are arranged on either side of the hopper (10). Thus the hopper (10) is readily moved sideways to expose the shutter plate members (20, 20a), plate piston members (30, 30a), chamber (18) and the shaping means (40) so that they can be easily cleaned up or repaired.

The hopper (10) is mounted on the rails (16, 16a) via wheels (15, 15a) to provide a space between the hopper (10) and the frame (25) in which the chamber (18) and the shutter mechanism are arranged. The shutter mechanism and the enclosure defining the chamber (18) are supported on the frame (25). The drive means for the piston (30) and the shutter (20), which will be discussed later in detail, are also mounted on the frame (25).

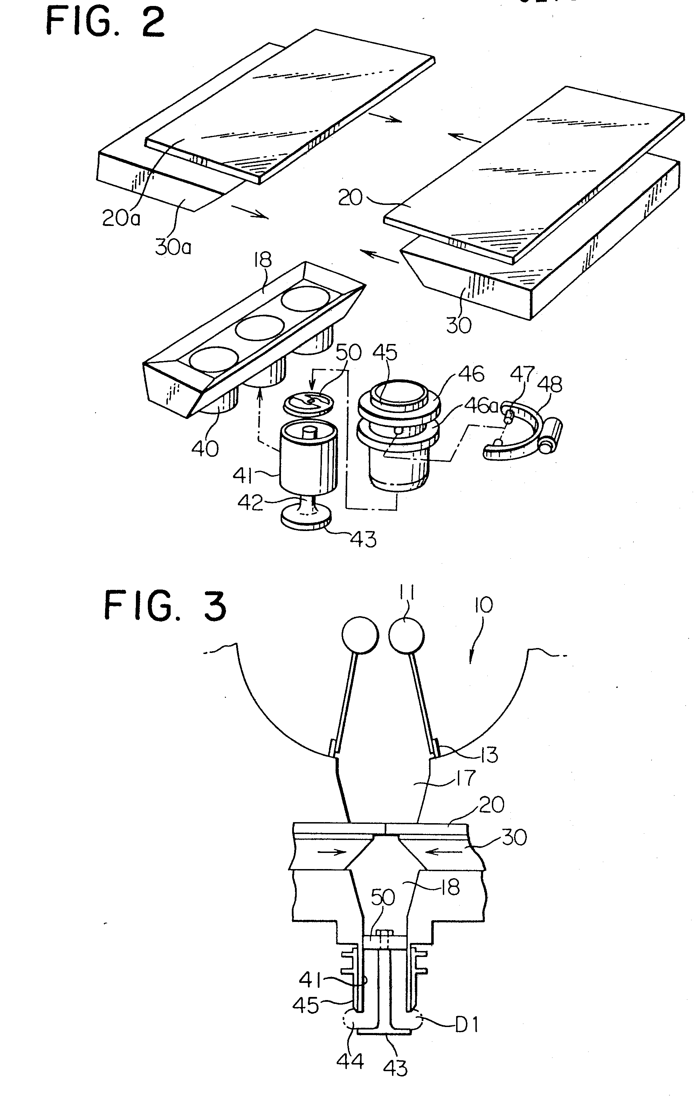

The shutter mechanism comprises a pair of shutter plate members (20, 20a) arranged beneath the hopper (10). The shutter plate members (20, 20a) are flat plates as shown in Fig. 2, and engage the hopper (10) slidably. The shutter plate members (20, 20a) are arranged so that they are horizontally movable toward and away from each other to close and open the communication between the narrower space (17) of the hopper (10) and the chamber (18). In Fig. 1, the closed position of the members (20, 20a) are described in dotted lines. The shutter plate members (20, 20a) are pivotally connected to swing members (21, 21a), which are in turn connected to shafts (22, 22a) driven by a motor (not shown) about their axes reciprocally. Therefore, the shutter plate members (20, 20a) are slidably moved along the bottom of the hopper (10) by rotating the shafts (22, 22a) so that the outlet (7) is controllably closed and opened.

In the chamber (18) a pair of plate piston members (30, 30a) are provided, which are slidably movable along the undersurface of the pair of shutter plate members (20, 20a). As shown in Fig. 2, the plate piston members (30, 30a) are plates having a certain thickness and width positioned above the shaping means (40). Similarly to the shutter plate members (20, 20a), the plate piston members (30, 30a) are horizontally moved as indicated by arrows in Fig. 2. As shown in Figs. 1 and 2, the inner end surface of each plate piston member (30, 30a) progressively recedes downward from the other plate piston member so that it forms a slope, and a space is formed between them so that the distance between the two piston members progressively increases toward the shaping means (40).

Thus, when the plate piston members (30, 30a) are at a closed position as indicated by the dotted lines in Fig. 1, that is, their innermost ends (31, 31a) are made to contact each other, the slopes on the inner end surfaces define a reversed V in cross-section. When the plate piston members progress toward each other, the slopes tend to push the dough present between the plate piston members downwardly and toward the center of the chamber (18) and into the inner sleeve (41) of the shaping means (40), which communities with the chamber (18).

The outer end of each plate piston member (30, 30a), is connected to a shaft (33, 33a). The shafts (33, 33a) are connected to engagement members (34, 34a), which are mounted pivotally to shafts (35, 35a) mounted on swing members (36, 36a). The outer end of each swing member (36, 36a) is fixedly connected to a shaft (37, 37a) which is driven by a motor (not shown) to swing the swing members (36, 36a). Thus, the plate piston members (30, 30a) slidably move along the shutter plates (20, 20a).

The shaping means (40) is arranged under the bottom of the chamber (18). The shaping means (40) comprises an inner sleeve (41) provided with a flange around its top end, which flange is connected to the frame (25) for support, an outer sleeve (45) slidably movable along the inner sleeve (41), a shaft (42) extending along the axis of the sleeves (41, 45), leaving an annular space between the shaft and the inner sleeve as a passage for dough, and a disc (43) provided on the bottom end of the shaft (42). The periphery of the disc (43) is arranged so that it is in alignment with the path of said outer sleeve (45).

As shown in Fig. 2, three shaping means (40) may be arranged side by side under the bottom of the chamber (18), perpendicular to the direction of movement of the shutter plate members (20, 20a) or the plate piston members (30, 30a). As already mentioned, the inner sleeve (41) is connected to the frame (25) by its flange, as shown in Fig. 1. However, for simplicity, the flange is eliminated from the inner sleeve (41) in Fig. 2. A disc holder (50) is mounted to the upper end of the inner sleeve communicating with the chamber (18). The holder (50) is provided with openings to allow the passage of dough through it and a center hole, the shaft (42) is connected to the holder (50) through its center hole with a bolt. On the periphery of the outer sleeve (45), a pair of engaging rings (46, 46a) are provided. Between the engaging rings holes are provided, to which holes, pins (47) of an arm (48) are pivotally connected. The arm (49), in turn, is fixedly connected to a driven shaft (49) (Fig. 1).

The driven shaft (49) is driven to reciprocate the outer sleeve (45) between a position where it is raised, so that an annular opening (44) is formed between it and the disc (43), and the position where the outer sleeve (45) is lowered to close the annular opening (44), as shown in Fig. 1.

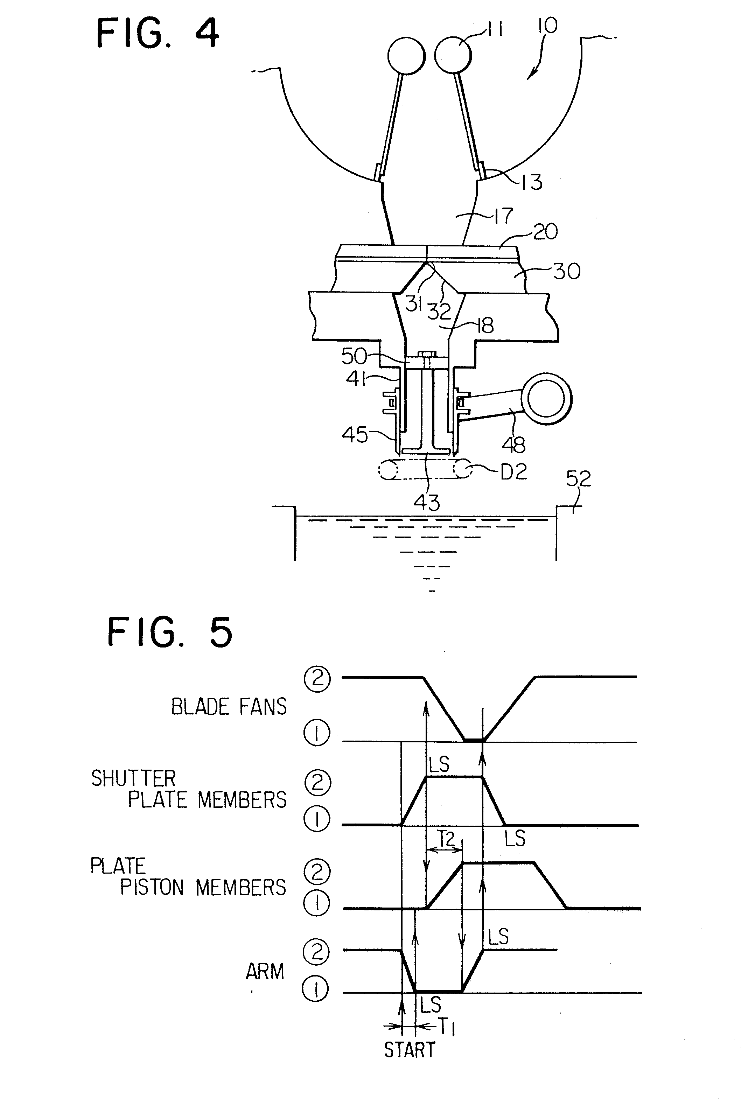

The operation of the apparatus for producing a dough ring will be discussed by reference to Fig. 3 and Fig. 4.

First, kneaded dough is supplied to the hopper (10). As shown in Fig. 3, a pair of arms (12, 12a) attached with blades (13, 13a) at their free ends agitate and propel the dough toward the lower narrower space (17). The dough accumulated in the lower narrower space (17) progresses toward the outlet (7) at the bottom of the hopper (10). Since the lower space (17) is narrower than the upper space (9), enough dough to supply the chamber (18) accumulates in this space (17) even when the dough in the hopper (10) is consumed and thus empties the upper wider space. When the dough fills the chamber (18), the shutter plates (20, 20a) slidably move toward each other so that the communication between the lower narrower space (17) and the chamber (18) is disconnected. Then the shafts (37, 37a) rotate to swing the swing members (36, 36a) so that the plate piston members (30, 30a) move toward each other as indicated by arrows in Fig. 3. Thus, the dough between the sloped inner end surfaces of the plate piston members (30, 30a) is pushed toward the middle and downwardly of the chamber (18) and progresses downward through the openings of the disc holder (50) into the inner sleeve (41) of the shaping means (40).

The dough propelled by the piston members (30, 30a) imparts pressure to the dough in the inner sleeve (41) to progress downward. When the piston members (30, 30a) move toward each other, the outer sleeve (45) is raised to form an annular opening (44). Thus a portion of the dough is pushed out of the annular opening (44) and protrudes into the open air, as depicted in dotted lines $D_1$ of Fig. 3.

When the inner end surfaces of the plate piston members contact each other as shown in Fig. 4, a preselected amount of the dough, corresponding to the displacement of the piston members, is fed out of the annular opening (44). Then the driven shaft (49) rotates to swing the arm (48) so that the outer sleeve (45) slidably moves downward to the disc (43). As the outer sleeve (45) moves downward, its lower end cuts into the dough portion moving through the annular opening (44) into the open air. When the lower end of the outer sleeve (45) touches the periphery of the disc (43), the dough portion around the annular opening (44) is completely separated from the dough in the shaping means (40) and becomes a ring-shaped dough as shown in Fig. 4 in dotted lines ($D_2$). An oil vessel (52) may be positioned under the shaping means (40), so that the dough ring drops into the oil in the oil vessel (52) to be fried, resulting in a ring doughnut.

It should be noted that, unless the conditions for the movement of the piston members (30, 30a) are changed, the dough in the chamber (18) always receives the same pressure from the movement of the plate piston members (30, 30a), and the same amount of dough is always pushed into the inner sleeve (41), resulting in the same amount of dough being fed out of the annular opening (44) at each stroke of the plate piston members. In other words, the movements of the plate piston members impart pressure to the dough in the chamber (18) so that a predetermined amount of dough is pushed out of the chamber and is fed out of the annular opening (44). In the apparatus of this preferred embodiment, the strokes of the plate piston members (30, 30a) are easily regulated by changing the rotation angle of the shafts (37, 37a).

Therefore, the amount of the dough ($D_1$) fed out of the annular opening, which forms the dough ring ($D_2$), is readily regulated by changing the strokes of the plate piston members. Further, in this apparatus, only one of the plate piston members can be moved while the other does not operate. In this case, the amount of dough fed out of the annular opening is half as much as where both piston members are moved to push the dough. As a result, in the apparatus (1) the size of the dough ring is readily changed by adjusting the stroke of the plate piston member and/or stopping one of the plate piston members.

In Fig. 5, the time chart of the operations of the blade fans (13), the shutter plates (20, 20a), the plates piston members (30, 30a) and the arm (48) attached to the outer sleeve (45) are shown. These members are sequentially controlled by a timing means, which can be any type of commercially available programmable controller.

In Fig. 5, the levels 1 and 2 indicate the position of each member. The postion is indicated by encircled 1 and 2 attached to the corresponding members in Fig. 1. The sign LS indicates the switching of the limit switch which detects the member arriving at each position.

As shown in Fig. 5, when the operation starts, a pair of shutters (20) start a movement to disconnect the communication between the lower narrower space (17) of the hopper (10) and the chamber (18). At the same time, the arm (48) is swung up to slidably move the outer sleeve (45) upward to a position where the lower end of the outer sleeve (45) is remote from the disc (43) to provide the annular opening (44) between them. When limit switches detect that the inner end surface of the shutter plate has arrived at the closing position as shown by the encircled 2 in Fig. 1, the plate piston members (30, 30a) start to move toward each other until their inner end surfaces contact each other after the lapse of the time period T$_2$. The movement of the plate piston member imparts pressure to the dough in the chamber, and a desired amount of dough is fed out of the annular opening at the end of the time period T$_2$.

Then the arm (48) is swung down to slidably move the outer sleeve (45) downwards so that the lower end of the outer sleeve (45) contacts the periphery of the disc (43) and the annular opening is closed. Thus a dough ring is shaped and drops into the oil. Then the plate piston member moves back to the open position. During the operation, the blades (13, 13a) in the hopper (10) is periodically swung by the shafts (11, 11a) in a certain angle as indicated by an arrows A in Fig. 1. Therefore, the blades propel and dough toward the lower narrower space (17).

In this preferred embodiment, the downward swing movement of the arm (48) is actuated in response to the end of the pushing movement of the plate piston member as shown in Fig. 5. However, the timing of the downward swing of the arm (48), that is the downward movement of the outer sleeve (45), can be chosen so that a selected amount of the dough fed out of the annular opening can be cut and shaped into a dough ring of a desired size. To obtain a dough ring of a desired size, the timing of actuating the movements of the plate piston members (30, 30a) and the arm (48) can be controlled to accommodate the characteristics of the dough such as the composition of the materials contained, or its viscosity.

In an alternative embodiment, the shaping means (40) can be replaced with a shaping means for producing a ball dough or a crescent-shaped dough as disclosed in U.S. Patent no. 4,015,518. In this embodiment, any size or type of doughnut with a filling can be readily produced. If the space between the inner sleeve (41) and the disc (43) is closed and at least one opening is provided on the inner sleeve, dough within the inner sleeve is pushed and swells out when the other sleeve (45) is raised. When the outer sleeve slidably moves downward to cut the swelled dough, dough of a crescent or ball form is shaped depending on the shape of the opening in the inner sleeve. The apparatus can produce dough of any size or any form.

As described above, the apparatus of the present invention can produce a dough ring without a compressor or pump and can readily regulate the size of the dough ring.

Further, the size of the dough ring can be adjusted merely by controlling the movement of the stroke of the piston members. Critically controlling the timing of the operation of a pump or compressor and the movement of the outer sleeve is not necessary. Additionally, according to this invention, doughnuts of the same size can be produced automatically at a high speed.

## Claims

1. An apparatus for shaping a dough product including:
   a) a hopper for containing dough, with an inlet and an outlet,
   b) a chamber communicating with said hopper via a shutter provided at the outlet of the hopper and adapted to close or open the communication between the hopper and the chamber, and
   c) at least one shaping means communicating with said chamber, characterized by pushing means provided in said chamber for pushing a predetermined amount of said dough from said chamber into said shaping means so that the same amount of dough is fed out of said shaping means.

2. Apparatus as claimed in claim 1, wherein said hopper comprises means to propel the dough toward said shutter.

3. Apparatus as claimed in claim 2, wherein said means comprises a pair of blade fans.

4. Apparatus as claimed in claim 1, 2, or 3, wherein said shutter comprises a pair of plates movable to open and close and outlet of said hopper.

5. Apparatus as claimed in claim 1,2,3 or 4, wherein said pushing means comprises a pair of piston means.

6. Apparatus as claimed in claims 4 and 5, wherein said pair of piston means comprises a pair of plate piston members moving along the shutter plates.

7. Apparatus as claimed in claim 5 or 6, wherein said pair of piston means or plate piston members include slopes to provide a space therebetween so that the distance between the two piston means progressively increases toward said shaping means.

8. Apparatus as claimed in any of claims 1 to 7, wherein the movement of said pushing means is controlled to impart a selected pressure to said dough in said chamber so that a desired amount of dough is pushed out of said chamber.

9. Apparatus as claimed in any of claims 1 to 8, further comprising a timing means to synchronize the opening and closing of said shutter and the movement of said pushing means.

10. Apparatus as claimed in any of claims 1 to 9, wherein a plurality of said shaping means are aligned side by side and communicate with said chamber so as to produce a plurality of dough products simultaneously.

11. Apparatus as claimed in any of claims 1 to 10 wherein said shaping means includes an inner sleeve defining a cylindrical space communicating with said chamber, an outer sleeve provided slidably movable along said inner sleeve,

a shaft extending along the axis of said cylindrical space beyond the end of said sleeves, and

a disc provided on one end of said shaft, the periphery of said disc being in alignment with the path of said outer sleeve,

said outer sleeve being arranged so that when positioned away from said disc, a gap is provided between said sleeve and the periphery of said disc, forming an annular opening, and, when moved toward the disc, said annular opening is closed, whereby a dough ring is fed out of said annular opening of said shaping means.

12. A method for shaping a dough product, comprising the steps of:

a) opening the shutter of a hopper positioned at the bottom thereof,

b) introducing dough from said hopper into a chamber terminating in a space with an opening therein

c) closing said shutter,

d) decreasing the volume of said chamber space, thereby pushing a predetermined amount of said dough from said space through said opening, and

e) cutting said dough at said opening to shape a dough product

13. A method for shaping a dough product as claimed in claim 12 wherein dough is introduced from said hopper into chamber terminating in a cylindrical space with an annular opening at the bottom thereof, and said dough is cut at said annular opening to shape a dough ring.

# FIG. 1

0273760

# FIG. 2

# FIG. 3

0273760

# FIG. 4

# FIG. 5